(19) Europäisches Patentamt
European Patent Office
Office européen des brevets

(11) **EP 2 107 790 A2**

(12) **EUROPEAN PATENT APPLICATION**

(43) Date of publication:
**07.10.2009 Bulletin 2009/41**

(51) Int Cl.:
**H04N 1/405** (2006.01)

(21) Application number: **09156422.9**

(22) Date of filing: **27.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **02.04.2008 JP 2008096562**

(71) Applicant: **Canon Kabushiki Kaisha Tokyo 146-8501 (JP)**

(72) Inventor: **KAWAMURA, Naoto, c/o CANON KABUSHIKI KAISHA Tokyo, 146-8501 (JP)**

(74) Representative: **TBK-Patent Bavariaring 4-6 80336 München (DE)**

(54) **Image processing apparatus and method thereof**

(57) A quantizing unit quantizes a pixel of interest of an input image. An error detector calculates an error generated upon quantizing the pixel of interest. An error diffusion matrix diffuses the error to non-quantized pixels, which are separated by a predetermined distance from the pixel of interest and are located in a ring pattern, based on an error diffusion matrix.

# F I G. 3

**Description**

BACKGROUND OF THE INVENTION

Field of the Invention

The present invention relates to generation of a halftone screen and image processing using the halftone screen.

Description of the Related Art

[AM Modulation Method]

An electrophotographic printer uses a tone reproduction method using halftone dots or a line screen so as to attain stable tone reproducibility. This is because the AM modulation using halftone dots can make the fundamental frequency constant depending on the grid intervals of halftone dots, and can obtain tone reproduction that avoids the weakness of an electrophotography system which is weak in variations of the spatial frequency characteristic. On the negative side, in color printing, moiré is readily generated due to overlaying of toners of C, M, Y, and K colors.
In order to suppress moiré, different screen angles are set for respective color components to drive the frequency of moiré beats generated between color components to a high-frequency region, thus visually obscuring moire. For example, a Y screen angle is set to be 30°, and C, M, and K screen angles are set to be 0 or 60°, thereby suppressing moiré due to overlaying of color components.
In digital halftone processing, since the resolution of a digital image is discrete, arbitrary screen angles cannot be set. However, by selecting optimal and discrete screen angles for respective color components, moiré can be suppressed.
Even upon optimization by introducing screen angles, moiré beats are merely driven to a high-frequency region, but a unique pattern generated due to overlaying of color components still remains. This is a so-called Rosetta pattern and becomes an obstacle upon outputting an image with high image quality. In particular, upon outputting an image with high image quality, smooth image quality reproduction like a photograph of silver halide processes is required, and such Rosetta pattern is a serious obstacle in meeting this requirement.

[Error Diffusion Method]

As a tone reproduction method that avoids the problem of the AM modulation method, an error diffusion method used in many printers such as ink-jet printers is known. The error diffusion method can avoid moiré, can preserve local densities, and is excellent in the resolution and image sharpness, thus satisfactorily reproducing tonality.
The spatial frequency characteristic of an image that has undergone such error diffusion method indicates a so-called blue noise characteristic with low spectrum intensity in a low-frequency region. The blue noise characteristic generally has an excellent resolution characteristic since the spatial frequency characteristic extends up to a high-frequency region, and exhibits satisfactory tone reproducibility since the densities of the image are locally preserved due to re-use of errors generated by binarization. Therefore, the error diffusion method is popularly used in ink-jet printers. However, the error diffusion method is not practically used in an electrophotographic printer since a stable output cannot be obtained for the following reasons.
An electrophotographic printer has an exposure process that scans a light beam to remove electric charges from a uniformly charged surface layer of a photosensitive drum of, for example, an organic photoconductor (OPC) or amorphous silicon. This exposure process has nonlinearity. Complexity of electrophotography processes including development, transfer, and fixing also causes nonlinearity.
An interference occurs between print dots due to this nonlinear characteristic, thus considerably impairing tonality. For example, even when one independent dot is to be printed, it is difficult to record such a dot. On the other hand, dots can be surely recorded in a cluster state of several dots (to be referred to as cluster dots hereinafter). For this reason, the high-frequency characteristic lowers, and the tonality of a highlight region of an image deteriorates.
If the distance between dots is small, toner may move to connect dots. In the processes for recording dots by attaching ink drops onto a medium like in the ink-jet system, although a micro phenomenon between inks and a medium occurs, an interference between print dots hardly occurs, and dots can be surely recorded.
In other words, due to such nonlinearity, an electrophotographic printer records an image by limiting the spatial frequency of an image to a certain frequency region using a halftone screen obtained by clustering dots (to be referred to as a cluster halftone screen hereinafter) to lower high-frequency components.

**EP 2 107 790 A2**

SUMMARY OF THE INVENTION

The present invention in its first aspect provides an image processing apparatus as specified in claims 1 to 7.

The present invention in its second aspect provides an image processing method as specified in claim 8.

According to these aspects, a halftone screen applicable to an electrophotographic printer can be generated. Also, a halftone screen that can suppress generation of moiré, and can obtain satisfactory tone reproduction can be generated.

Further features of the present invention will become apparent from the following description of exemplary embodiments with reference to the attached drawings.

BRIEF DESCRIPTION OF THE DRAWINGS

Fig. 1 is a block diagram showing the arrangement of an image processing apparatus according to an embodiment.

Fig. 2 is a block diagram showing the arrangement of a dot generator which generates a cluster halftone screen.

Fig. 3 is a block diagram showing the arrangement of a binarizing processor.

Fig. 4 is a view showing the relationship between non-binarized pixels and distribution intensities (diffusive ratios).

Fig. 5 is a view showing the spatial frequency characteristic by two-dimensional Fourier transformation when a uniform halftone image of image data ranging from 120 to 140 is binarized.

Fig. 6 is a graph showing the spectral intensities of a section along an ordinate Y - Y' of a spectrum pattern shown in Fig. 5.

Figs. 7A and 7B are views showing an error diffusion matrix and grayscale chart used to evaluate the characteristic of the binarization result.

Figs. 8A to 11B are views showing the binarization results of the grayscale chart so as to examine the basic characteristic of an error diffusion method.

Fig. 12 is a graph showing the diffusion distribution of errors.

Figs. 13A to 14B are views showing the binarization results of the grayscale chart.

Fig. 15 is a graph showing the diffusion distribution of errors.

Fig. 16 is a view for explaining a circular filter.

Fig. 17 is a graph showing the frequency characteristic of the circular filter.

Fig. 18 is a view for explaining a ring filter.

Figs. 19 and 20 are graphs showing the frequency characteristic (amplitude) of the ring filter using a coefficient e as a parameter.

Fig. 21 is a view showing the binarization result of a photo image using an error diffusion matrix having the ring filter characteristic.

Fig. 22 is a view showing the binarization result of a uniform halftone image of image data ranging from 120 to 140 using an error diffusion matrix having the ring filter characteristic.

Fig. 23 is a view showing the spatial frequency characteristic of the image shown in Fig. 22 by two-dimensional FFT.

Fig. 24 is a graph showing the spectral intensities of a section along the ordinate of a spectrum pattern shown in Fig. 23.

Fig. 25 is a block diagram for explaining the signal processing sequence based on a green noise method.

Fig. 26 is a view showing the relationship between reference pixels and reference intensities.

Figs. 27A to 27C are views showing the binarization result of a uniform halftone image of image data ranging from 120 to 140 by the green noise method.

Fig. 28 is a view showing the spatial frequency characteristic of an image shown in Fig. 27A by two-dimensional Fourier transformation.

Fig. 29 is a graph showing the spectral intensities of a section along the ordinate of a spectrum pattern shown in Fig. 28.

Figs. 30A to 31B are views showing the binarization results of the grayscale chart.

Figs. 32 and 33 are views showing the binarization results of the grayscale chart by the green noise method using a Sticki matrix.

Fig. 34 is a view showing the binarization result when a gain coefficient is increased to h = 0.6.

Figs. 35A and 35B are views showing the binarization result when a different reference pixel matrix is used.

Fig. 36 is a block diagram showing the arrangement of a binarizing processor according to the second embodiment.

Fig. 37 is a flowchart for explaining the operation of a control unit.

Fig. 38 is a view showing region segmentation of values of data of a pixel of interest.

Fig. 39 is a view showing examples of error diffusion matrices, reference pixel matrices, and a gain coefficient.

Fig. 40 is a view showing the binarization result of the grayscale chart by the binarizing processor based on a hybrid method.

Fig. 41 is a view showing an example of a photo image.

Figs. 42A and 42B are views showing the binarization result of the photo image using a simple error diffusion matrix.

Fig. 43 is a view showing the binarization result of the photo image by the binarizing processor based on the hybrid method.

Fig. 44 is a block diagram showing an example of the arrangement of a binarizing processor according to the third embodiment.

Fig. 45 is a view showing examples of error diffusion matrices, reference pixel matrices, and a gain coefficient.

Fig. 46 is a view showing the binarization result of the grayscale chart.

Fig. 47 is a view showing the binarization result of the photo image.

DESCRIPTION OF THE EMBODIMENTS

Image processing according to embodiments of the present invention will be described in detail hereinafter with reference to the drawings.

First Embodiment

[Apparatus Arrangement]

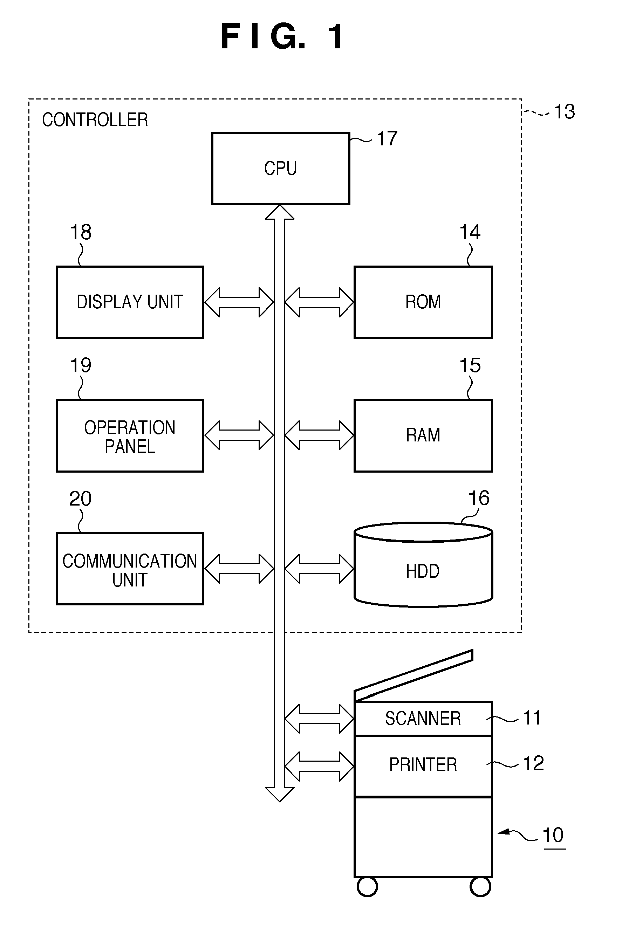

Fig. 1 is a block diagram showing the arrangement of an image processing apparatus according to an embodiment.

Functions of a multi-functional peripheral equipment (MFP) 10 having a scanner 11 and electrophotographic printer 12 are controlled by a controller 13 incorporated in the MFP 10.

A microprocessor (CPU) 17 of the controller 13 executes an operating system (OS) and various programs stored in a read-only memory (ROM) 14 and hard disk drive (HDD) 16 using a random access memory (RAM) 15 as a work memory. The HDD 16 stores programs such as a control program and image processing program, and image data.

The CPU 17 displays a user interface on a display unit 18, and inputs user instructions from software keys on the display unit 18 and a keyboard of an operation panel 19. For example, when a user instruction indicates a copy instruction, the CPU 17 controls the printer 12 to print a document image scanned by the scanner 11 (copy function).

A communication unit 20 is a communication interface, which connects a public line or network (not shown). When a user instruction indicates a facsimile (FAX) transmission instruction, the CPU 17 controls the communication unit 20 to transmit, via FAX, a document image scanned by the scanner 11 to a destination designated by the user (FAX function). When a user instruction indicates a push-scan instruction, the CPU 17 controls the communication unit 20 to transmit a document image scanned by the scanner 11 to a designated server (push-scan function). When the communication unit 20 receives a FAX image, the CPU 17 controls the printer 12 to print the received image (FAX function). When the communication unit 20 receives a print job, the CPU 17 controls the printer 12 to print an image in accordance with the print job (printer function). When the communication unit 20 receives a pull-scan job, the CPU 17 controls the communication unit 20 to transmit a document image scanned by the scanner 11 to a designated server or client in accordance with the scan job (pull-scan function).

Dot Generator

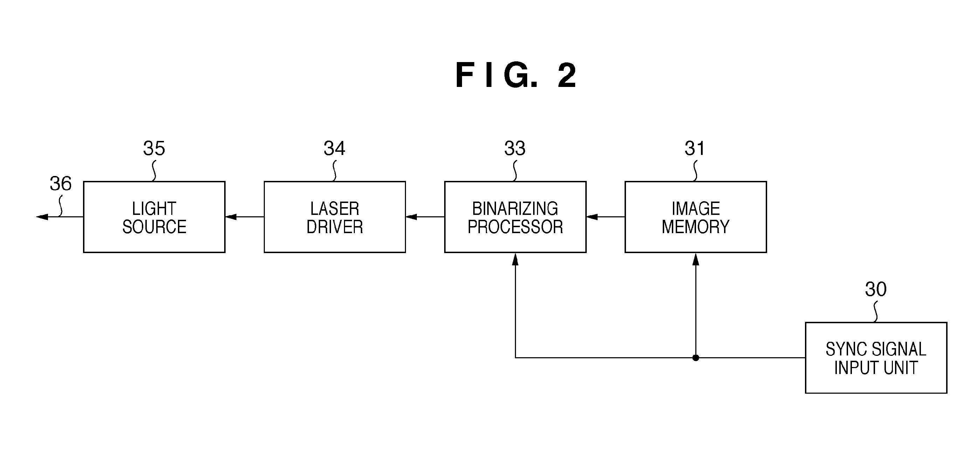

Fig. 2 is a block diagram showing the arrangement of a dot generator which generates a cluster halftone screen. Note that the dot generator is configured as a part of the controller 13.

A sync signal input unit 30 inputs, as sync signals, a horizontal sync signal Hsync indicating the scan timing of one line, a vertical sync signal Vsync indicating the scan timing of one page, and pixel clocks Vclock from the printer 12. These sync signals are sequentially input to an image memory 31 allocated on the RAM 15, and image data corresponding to the scan position of a photosensitive drum (not shown) is output.

The sync signals are also sequentially input to a binarizing processor 33. The binarizing processor 33 binarizes image data input from the image memory 31.

A laser driver 34 controls emission of a beam light source 35 by driving the beam light source 35 in accordance with a binary signal output from the binarizing processor 33. For example, when a binary signal is '1', the laser driver 34 controls the beam light source 35 to output a light beam 36 (laser ON); when it is '0', the laser driver 34 controls the beam light source 35 not to output any light beam 36 (laser OFF).

A detailed description of electrophotography processes will not be given. The light beam scans a photosensitive drum of the printer 12 to form (optically expose) an electrostatic latent image on the photosensitive drum. The electrostatic latent image is developed by toner, and is transferred as a toner image onto a print sheet. Upon formation of a color image, toner images of respective color components are multi-transferred onto a print sheet. After that, the print sheet is fed to a fixing device which fixes the toner image on the print sheet, and is then discharged outside the printer 12.

Binarizing Processor

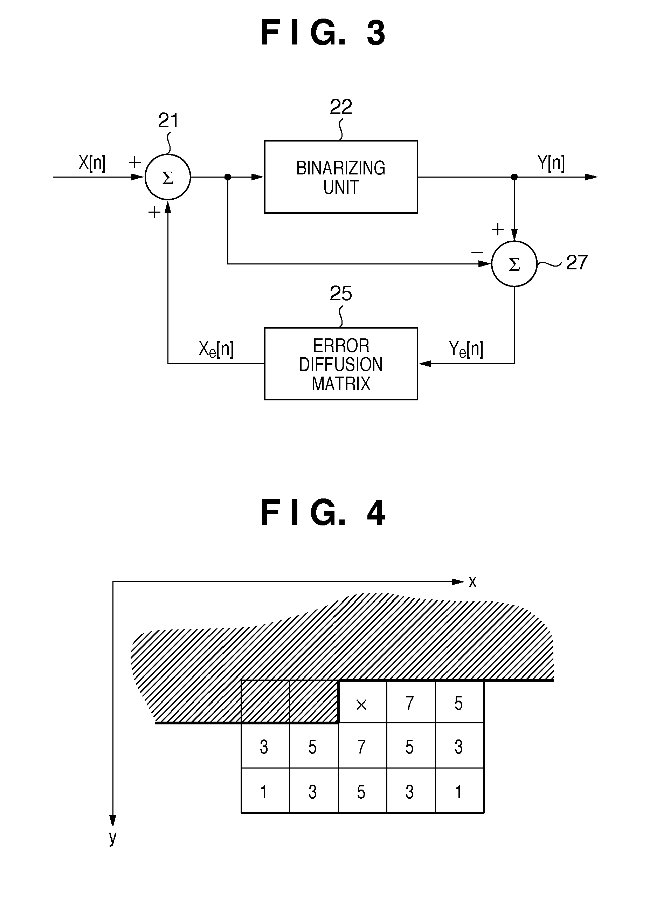

Fig. 3 is a block diagram showing the arrangement of the binarizing processor 33.

A binarizing unit 22 binarizes N-th input pixel data X[n] and outputs output pixel data Y[n]. An error detector 27 outputs an error (difference) generated upon binarization of the input pixel data X[n] as error data Ye[n]. An error diffusion matrix 25 diffuses the error data Ye[n] to non-binarized pixels (pixels to be binarized). An adder 21 adds diffusion data Xe[n] output from the error diffusion matrix 25 to pixel data of the non-binarized pixels to which an error is to be diffused.

Fig. 4 is a view showing the relationship between non-binarized pixels and diffusion intensities (diffusive ratios).

A pixel indicated by symbol X is a pixel of interest of binarization, x indicates the main scan direction of recording, and y indicates the sub-scan direction of recording. A hatched part above the pixel X of interest indicates binarized pixels X (those after binarization), and a part below the pixel of interest indicates non-binarized pixels. A numerical value given to each non-binarized pixel indicates a diffusive ratio, 7/48 of the error data Ye[n] are diffused to pixels which neighbor the pixel X of interest in the x- and y-directions, and 5/48 of the error data Ye[n] are diffused to obliquely lower right and lower left pixels of the pixel X of interest.

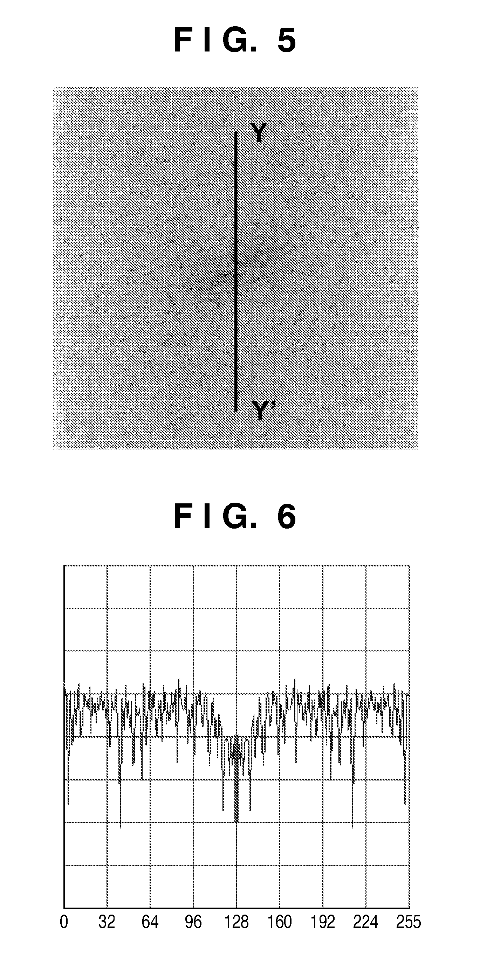

Fig. 5 is a view showing the spatial frequency characteristic by two-dimensional Fourier transformation when a uniform halftone image of image data ranging from 120 to 140 is binarized. White regions indicate spectra having large intensities. Fig. 6 is a view showing the spectral intensities of a section along an ordinate Y - Y' of a spectrum pattern shown in Fig. 5.

As can be seen from Figs. 5 and 6, in the spatial frequency characteristic of the halftone image binarized by the error diffusion method, the spectral intensities of a central portion (low-frequency region) are lowered. This spatial frequency characteristic indicates a so-called blue noise characteristic in which spectral intensities are lowered to have a zero frequency (at the position of 128 on the abscissa of Fig. 6) as the center, and the spectral intensities are strong in an intermediate-frequency region and high-frequency region. This blue noise characteristic represents that combining the electrophotography system and error diffusion method cannot yield a stable grayscale image due to nonlinearity of the electrophotography system, as described above.

Error Diffusion Matrix and Spatial Frequency Characteristic

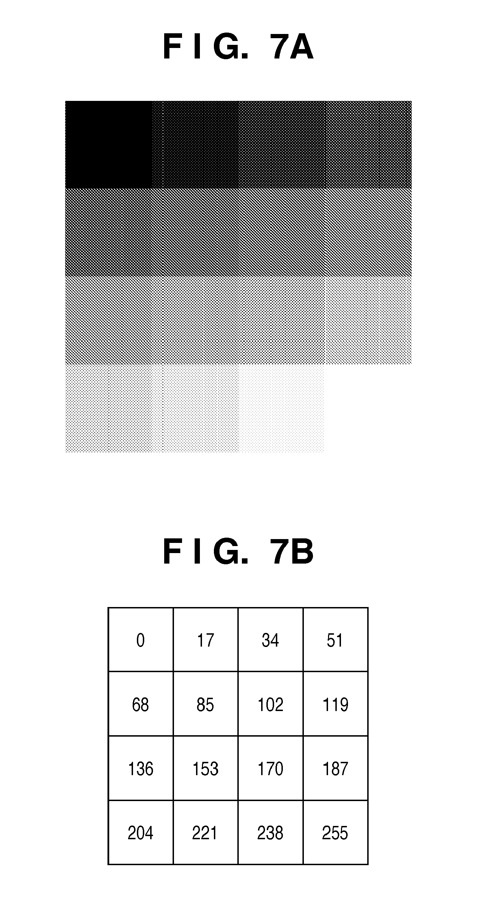

Figs. 7A and 7B are views showing an error diffusion matrix and a grayscale chart used to evaluate the characteristic of the binarization result. As shown in Fig. 7A, the grayscale chart includes 16 (= 4 × 4) patches. As shown in Fig. 7B, respective patches have image data (luminance values) obtained by dividing image data ranging from 0 to 255 at equal intervals.

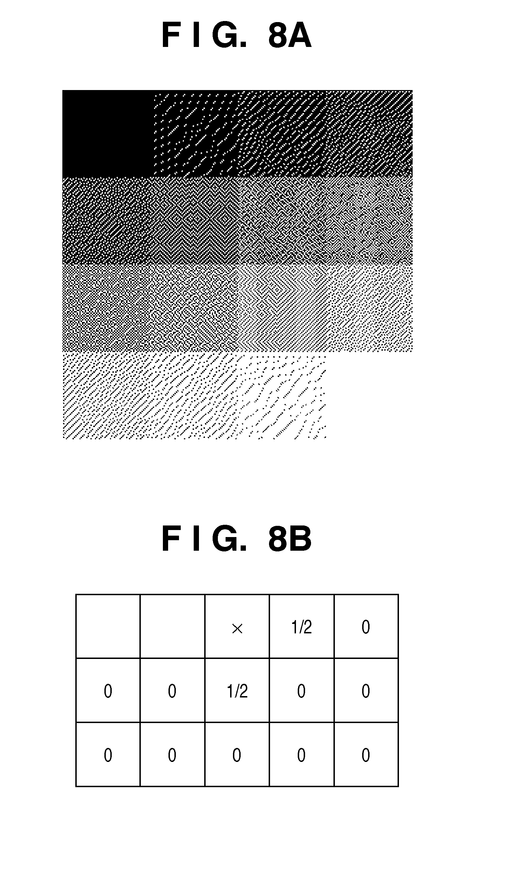

Figs. 8A and 8B are views showing the binarization result of the grayscale chart so as to examine the basic characteristic of the error diffusion method. Fig. 8B shows an error diffusion matrix used at that time, which diffuses an error by 1/2 to two non-binarized pixels which are located on the right side of a pixel of interest indicated by a mark X in the main scan direction, and below the pixel of interest in the sub-scan direction. The halftone densities of regions of the second and third rows from the top of Fig. 8A (to be referred to as regions 2 and 3 hereinafter) are expressed by fine dots to express the blue noise characteristic. A texture structure is conspicuous, and an output with high image quality cannot be expected.

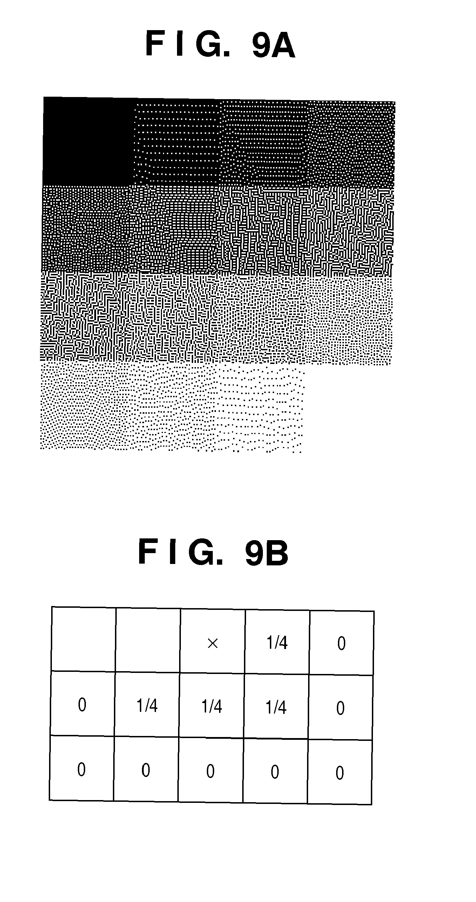

Figs. 9A and 9B are views showing the binarization result of the grayscale chart so as to examine the basic characteristic of the error diffusion method. Fig. 9B shows an error diffusion matrix used at that time, which diffuses an error by 1/4 to one pixel which is located on the right side of a pixel of interest indicated by a mark X in the main scan direction, and to three pixels which are located below the pixel of interest in the sub-scan direction. As can be seen from a comparison with the binarization result shown in Fig. 8A, cluster dots in regions 2 and 3 slightly become larger, and the spectral intensities in a high-frequency region attenuate slightly.

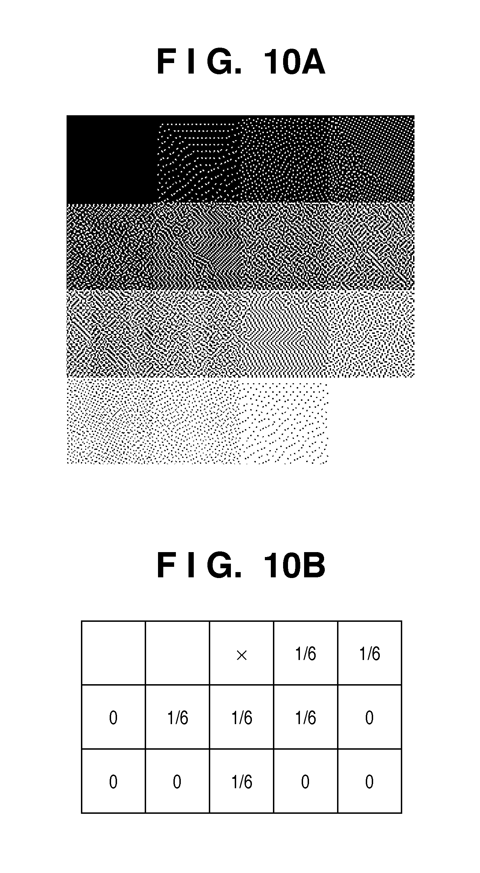

Figs. 10A and 10B are views showing the binarization result of the grayscale chart so as to examine the basic characteristic of the error diffusion method. Fig. 10B shows an error diffusion matrix used at that time, which diffuses an error by 1/6 to two pixels which are located on the right side of a pixel of interest indicated by a mark X in the main scan direction, and to four pixels which are located below the pixel of interest in the sub-scan direction. As can be seen from a comparison with the binarization result shown in Fig. 8A, cluster dots in regions 2 and 3 further become larger, and the spectral intensities in a high-frequency region further attenuate.

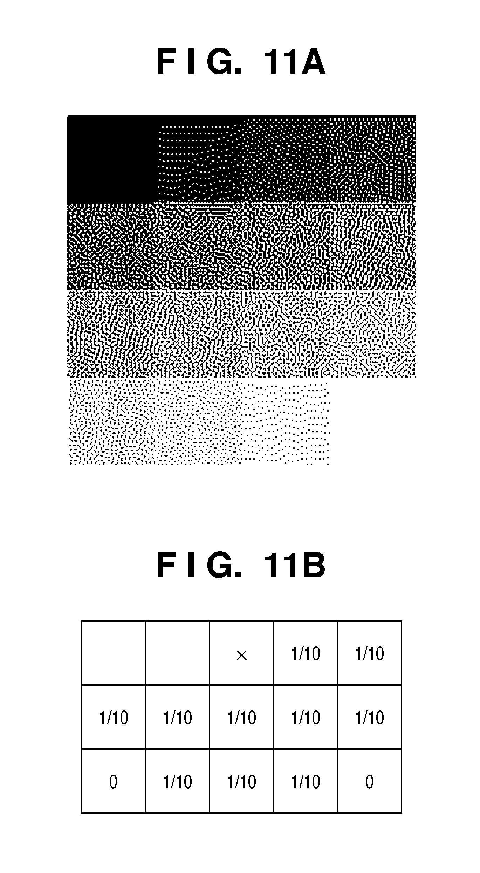

Figs. 11A and 11B are views showing the binarization result of the grayscale chart so as to examine the basic characteristic of the error diffusion method. Fig. 11B shows an error diffusion matrix used at that time, which diffuses an error by 1/10 to two pixels which are located on the right side of a pixel of interest indicated by a mark X in the main scan direction, and to eight pixels which are located below the pixel of interest in the sub-scan direction. As can be seen from the comparison with the binarization result shown in Fig. 8A, cluster dots in regions 2 and 3 further become larger, and the spectral intensities in a high-frequency region further attenuate.

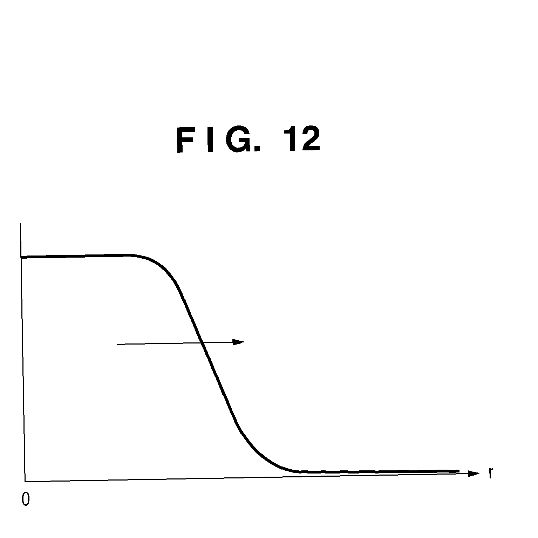

Upon observing the binarization results shown in Figs. 8A, 9A, 10A, and 11A, a characteristic like a low-pass filter in which the diffusion amount is abruptly reduced after a certain distance separated from a pixel of interest indicated by "0" is exhibited, as in an error diffusion distribution shown in Fig. 12. A change from the error diffusion matrix shown in Fig. 8B to that shown in Fig. 11B expresses a behavior in which the cutoff frequency of the low-pass filter shifts toward a high-frequency region. That is, laying out of error diffusion coefficients over a broad range like in the error diffusion matrix shown in Fig. 11B distributes an error of the pixel of interest to a broad range, and such process amounts to processing image data by a spatially expanded low-pass filter. For this reason, an image after binarization is expressed by large cluster dots, and has a spectrum distribution shifted in the low-frequency direction.

Some printers require larger cluster dots (an error diffusion matrix that shifts the spatial frequency to be closer to the low-frequency region). However, expansion of the error diffusion matrix size imposes a heavier load on hardware and software, and is inadvisable. Expansion of the error diffusion matrix size in the sub-scan direction means that of the memory size of a line buffer, thus imposing an especially heavy load. Thus, a method that can shift the spatial frequency to be closer to the low-frequency region within a range that does not exceed the error diffusion matrix size ($5 \times 3$) shown in Fig. 11B will be examined.

Shift to Low-frequency Region

The error diffusion matrix shown in Fig. 9B corresponds to an example in which an error is diffused to pixels within one pixel from the pixel of interest. In other words, if the distance from the pixel of interest is expressed by r pixels, whether or not an error is to be diffused for a certain pixel can be described as:

```
if (r ≤ √2)
    diffuse error;
else
    do not diffuse error; ... (1)
```

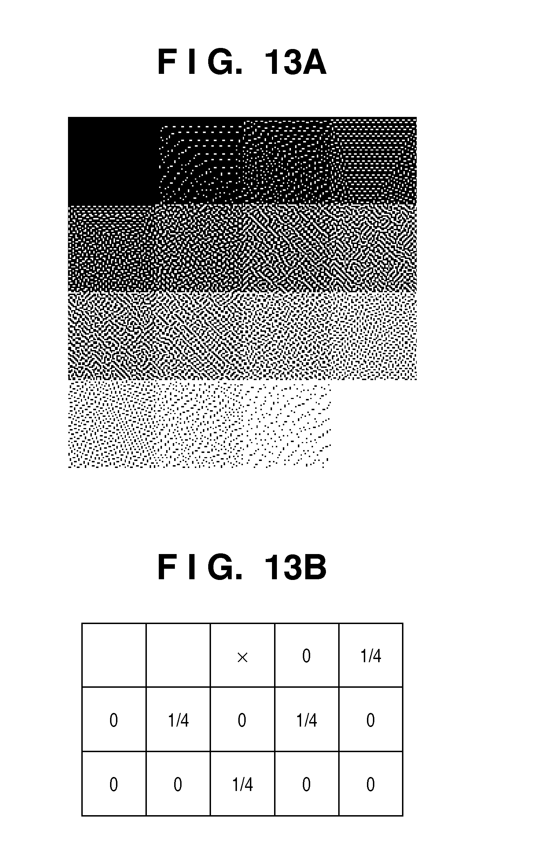

Figs. 13A and 13B are views showing the binarization result of the grayscale chart. An error diffusion matrix shown in Fig. 13B is set according to an algorithm described as:

```
if (√2 ≤ r ≤ 2)
    diffuse error;
else
    do not diffuse error; ... (2)
```

Upon comparison between Figs. 9A and 13A, the number of pixels to which an error is to be diffused is four in these matrices, but the binarization result shown in Fig. 13A has larger cluster dots, and the spatial frequency shifts to the low-frequency region. Furthermore, as can be seen from a comparison with Fig. 10A that diffuses an error to six pixels, the binarization result in Fig. 13A shifts to the low-frequency region.

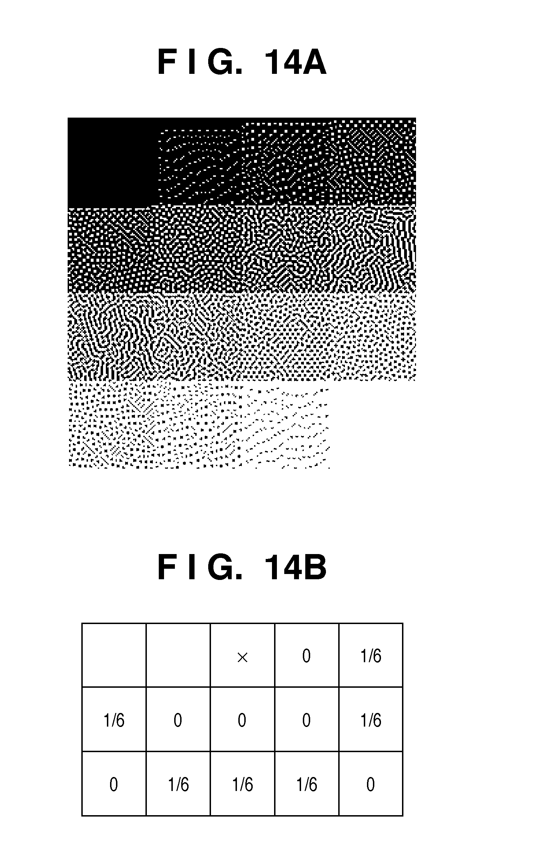

Figs. 14A and 14B are views showing the binarization result of the grayscale chart. An error diffusion matrix shown in Fig. 14B is set according to an algorithm described as:

```
if (2 ≤ r ≤ √5)
    diffuse error;
else
    do not diffuse error; ... (3)
```

Upon comparison between Figs. 13A and 14A, the spatial frequency further shifts to the low-frequency region in Fig. 14A.

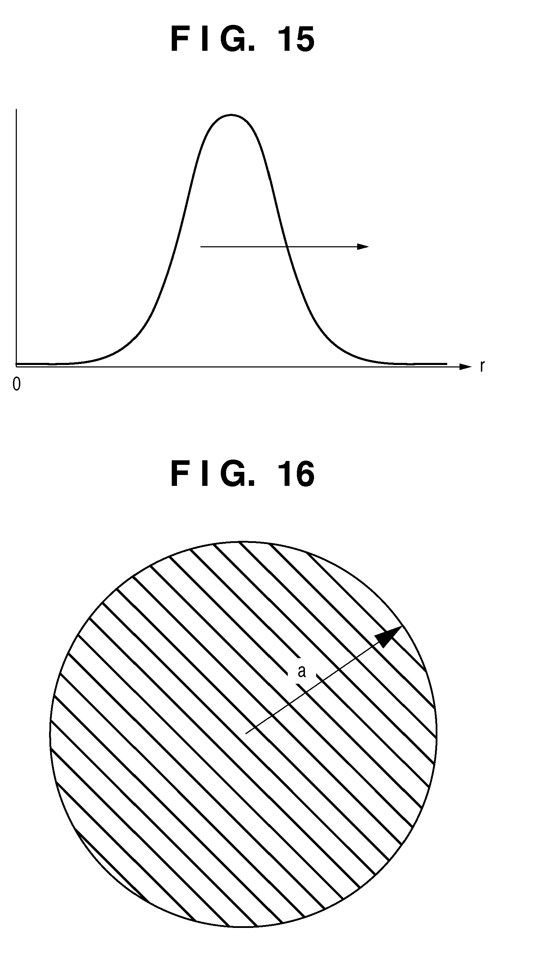

Upon observing the binarization results shown in Figs. 9A, 13A, and 14A, a characteristic like a band-pass filter which has a peak at a position separated from a pixel of interest indicated by "0" by a predetermined distance is exhibited like in an error diffusion distribution shown in Fig. 15. Using an error diffusion matrix having the characteristic shown in Fig. 15, a filter characteristic which cuts high-frequency components and low-frequency components of the spatial frequency characteristic and passes only intermediate frequency components through it, that is, a so-called green noise characteristic is obtained. Note that "green noise" is named since the signal distribution frequency region is included in an intermediate frequency region with respect to white noise and blue noise.

Circular Filter and Ring Filter

In error diffusion processing, information associated with a pixel of interest influences surrounding pixels. As a result, since an image is smoothed, the error diffusion processing can be also considered as smoothing filter processing. A smoothing filter which executes smoothing within the range of a distance $\underline{a}$ (within a circle having a radius $\underline{a}$), as shown in Fig. 16, to have a pixel of interest as the center (to be referred to as a circular filter hereinafter) will be examined. Note that all error diffusion coefficients within the circle are the same. The characteristic of the circular filter can be expressed by:

```
if (0 ≤ r ≤ a)
    f(x) = 1/n;
else
    f(x) = 0; ... (4)
```

where n is the number of pixels to which an error is diffused.

The frequency characteristic of the circular filter is expressed by:

$$F(f) = c \times J_1(f)/f \ldots (5)$$

where $J_1$ is the Bessel function of the first kind of order 0, f is the spatial frequency, and c is a constant.

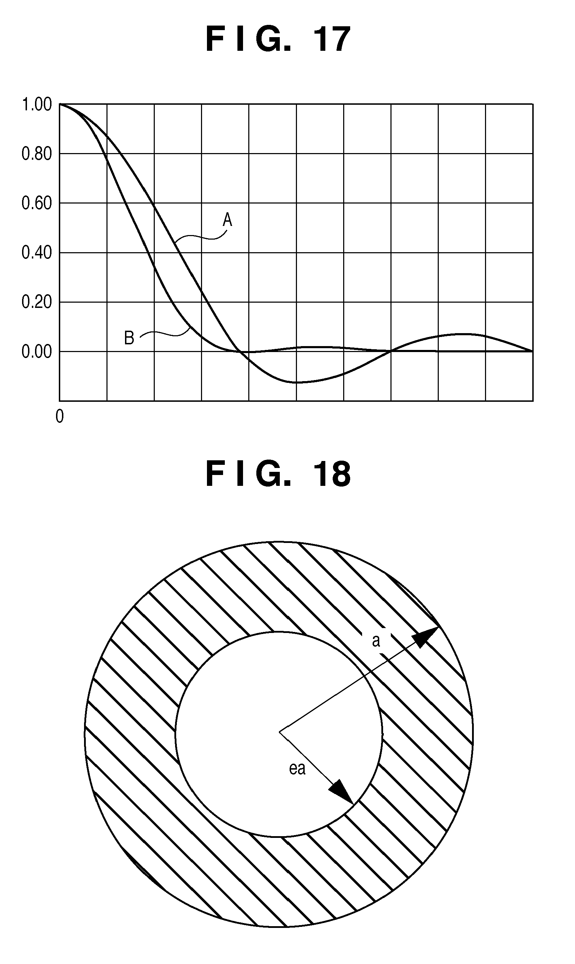

Fig. 17 is a graph showing the frequency characteristic of the circular filter. In Fig. 17, the abscissa plots the spatial frequency, curve A represents an amplitude distribution, and curve B represents an intensity (square of amplitude) distribution.

Next, a smoothing filter which executes smoothing within the range from a distance e·a (0 < e < 1) to a distance $\underline{a}$ (a ring-shaped part between a circle having a radius e·a and a circle having a radius $\underline{a}$), as shown in Fig. 18, to have a pixel of interest as the center (to be referred to as a ring filter hereinafter) will be examined. Note that all error diffusion coefficients within the ring are the same. The characteristic of the ring filter is expressed by:

```
if (e·a ≤ r ≤ a)
    f(x) = 1/n;
else
    f(x) = 0; ... (6)
```

for 0 < e < 1.

The frequency characteristic of the ring filter is expressed by:

$$F(f) = c \times \{J_1(f)/f - e^2 \times J_1(e·f)/e·f\} \quad \ldots (7)$$

That is, the ring filter sets a diffusive ratio of an error to a non-binarized pixel to be zero for non-binarized pixels which neighbor a pixel of interest, and to be a finite value for non-binarized pixels located outside the neighboring non-binarized pixels. Then, the ring filter diffuses an error to a plurality of non-binarized pixels, which are located outside the non-binarized pixels that neighbor the pixel of interest, and are separated by a predetermined distance from the pixel of interest, at the same diffusive ratio.

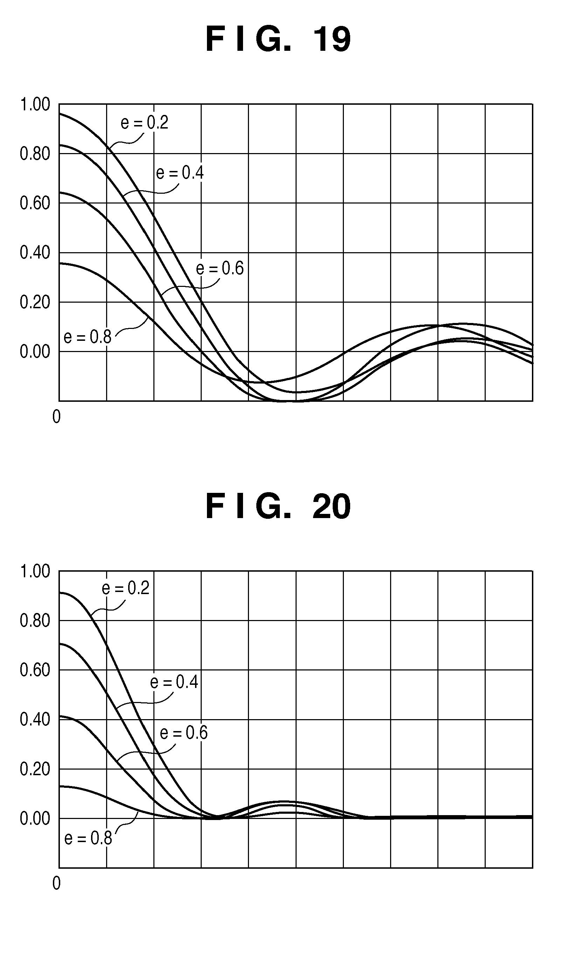

Fig. 19 is a graph showing the frequency characteristics (amplitude) of the ring filer to have the coefficient e as a parameter, and Fig. 20 is a graph showing the frequency characteristics (intensity) of the ring filer to have the coefficient e as a parameter. Note that the frequency characteristic when e = 0 is the same as that shown in Fig. 17.

With increasing coefficient e, the width of the ring is narrowed down, and the amplitude and intensity at zero frequency drop abruptly. On the other hand, a peak value of order 1 exhibits almost no change even when the coefficient e is changed. For example, the amplitudes, intensities, and peak values of order 1 when e = 0 and e = 0.8 are compared as follows:

|  |  | Zero Frequency | Peak value of order 1 | Ratio |
|---|---|---|---|---|
| Amplitude | Circular filter | 1 | 0.132 | 0.132 |
|  | Ring filter | 0.36 | 0.14 | 0.39 |
| Intensity | Circular filter | 1 | 0.0175 | 0.0175 |
|  | Ring filter | 0.13 | 0.0198 | 0.1523 |

As can be seen from the above description, the ring filter exhibits a band-pass characteristic which passes a certain frequency components through it. As can be seen from Figs. 17 and 19, the ring filter in which the peak position of order 0 shifts to the low-frequency region has a stronger smoothing effect.

As described above, even with the same kernel size (the diffusion range of an error), the ring filter that exhibits a band-pass filter characteristic is more advantageous than the circular filter that exhibits a low-pass characteristic since the ring filter can set the spatial frequency of cluster dots at a specific spatial frequency in the low-frequency range. That is, when the ring filter is used, a grayscale image can be stably formed in an electrophotographic printer.

Error Diffusion by Ring Filter

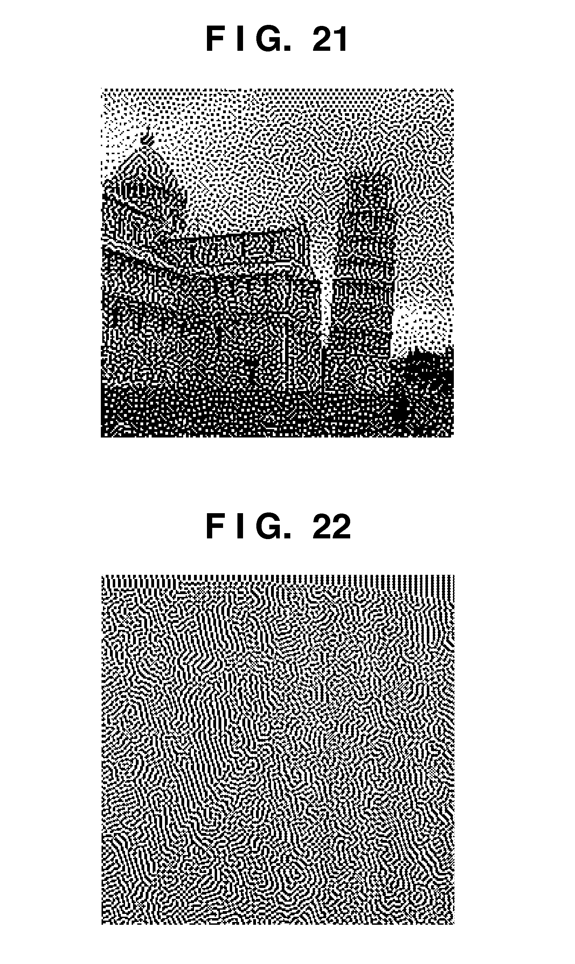

Fig. 21 is a view showing the binarization result of a photo image using the error diffusion matrix having the ring filter characteristic shown in Fig. 14B. As shown in Fig. 21, clustering of dots progresses, and halftone dots with strong graininess are formed.

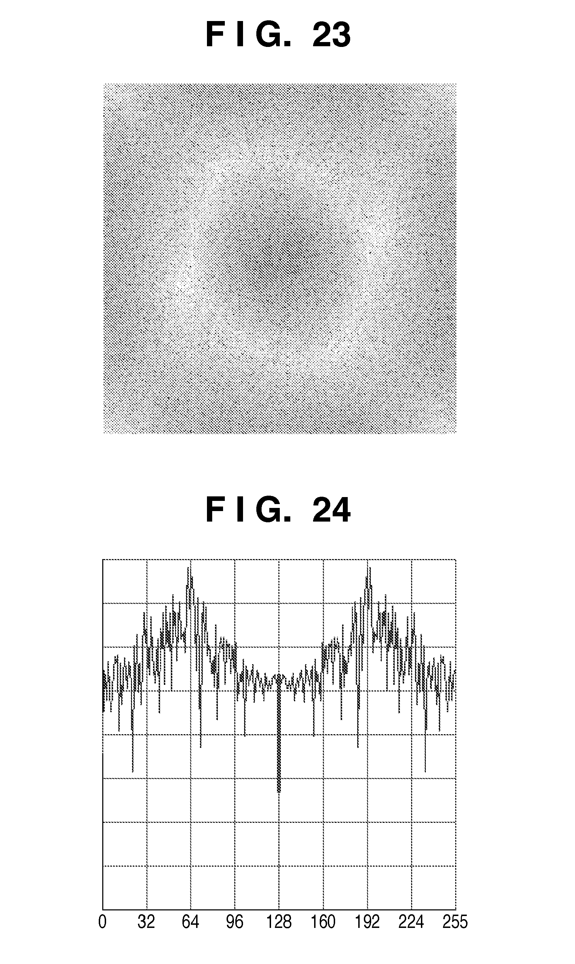

Fig. 22 is a view showing the binarization result of a uniform halftone image of image data ranging from 120 to 140 using the error diffusion matrix having the ring filter characteristic shown in Fig. 14B as in Fig. 5. Fig. 23 is a view showing the spatial frequency characteristic of the image shown in Fig. 22 by two-dimensional Fourier transformation, and Fig. 24 is a graph showing the spectral intensities of a section along the ordinate of a spectrum pattern shown in Fig. 23.

Using the error diffusion matrix having the ring filter characteristic shown in Fig. 14B, as can be seen from Figs. 23 and 24, a green noise characteristic in which spectra are concentrated in a doughnut-shaped, certain spatial frequency region, and the spectral intensities of the low- and high-frequency regions lower is exhibited.

As described above, using the error diffusion matrix having the ring filter characteristic, spatial frequency components can be reduced in the low- and high-frequency regions and can be limited to a predetermined frequency region suited to the electrophotography system using a halftone screen that clusters dots. As a result, a halftone screen which can stably form a grayscale image can be obtained. In addition, since there is no periodic structure of dots, no moiré is generated in reason. Furthermore, even for the nonlinearity of the electrophotography system and variation factors of the electrophotography processes with respect to the environment and time, since only a specific spatial frequency region is used, stable tone reproduction is realized, thus reproducing a grayscale image with high image quality.

Second Embodiment

Image processing according to the second embodiment of the present invention will be described below. Note that the same reference numerals in the second embodiment denote the same components as in the first embodiment, and a detailed description thereof will not be repeated.

Using the error diffusion matrix having the ring filter characteristic shown in Fig. 14B, a satisfactory grayscale image can be obtained. However, deterioration (artifacts) of cluster dots is observed in regions of the first and fourth rows from the top (to be referred to as regions 1 and 4 hereinafter). The second embodiment will explain a cluster halftone screen which can eliminate such artifacts and can generate satisfactory cluster dots on the overall region of an image.

Green Noise Method

As a method of eliminating the aforementioned artifacts, a green noise method may be used together. Details of the green noise method are described in Daniel L. Lau and Gonzalo R. Arce, "Modern Digital Halftoning (Signal Processing and Communications)", and U.S. Patent No. 6,798,537.

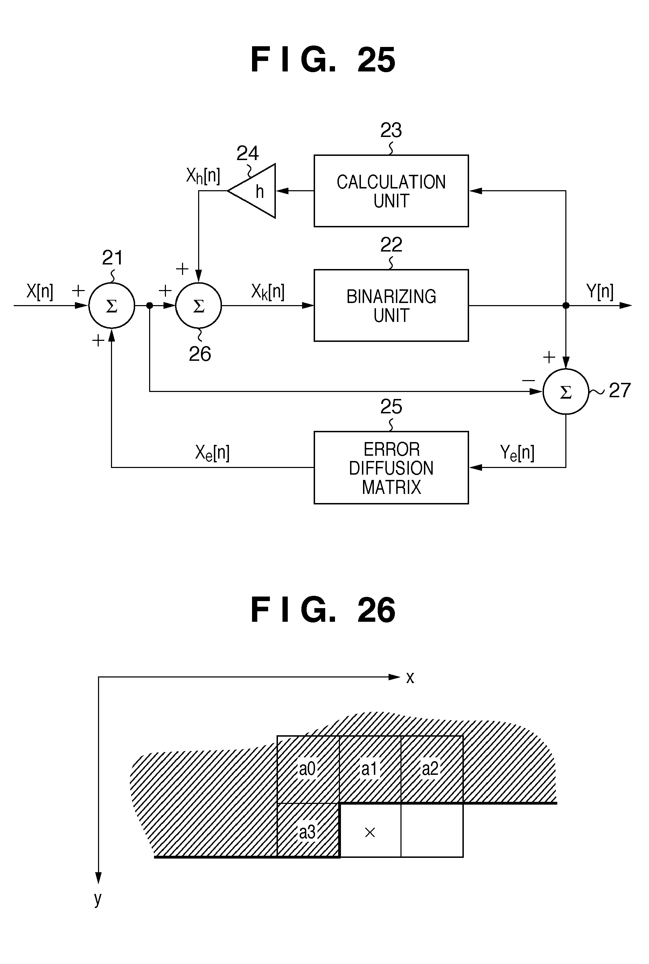

Fig. 25 is a block diagram for explaining the signal processing sequence based on the green noise method.

A binarizing unit 22 binarizes N-th input pixel data X[n] and outputs output pixel data Y[n]. An error detector 27 outputs an error (difference) generated upon binarization of the input pixel data X[n] as error data Ye[n]. An error diffusion matrix 25 diffuses the error data Ye[n] to non-binarized pixels. An adder 21 adds diffusion data Xe[n] output from the error diffusion matrix 25 to pixel data of the non-binarized pixels to which an error is to be diffused. The processes described so far are the same as those in the error diffusion method shown in Fig. 3.

A calculation unit 23 acquires the values of a plurality of binarized pixels (to be referred to as reference pixels hereinafter), and applies a predetermined calculation to the acquired values. A gain adjuster 24 calculates data Xh[n] by multiplying data output from the calculation unit 23 by a predetermined gain h. An adder 26 adds the data Xh[n] to the pixel data output from the adder 21. The binarizing unit 22 inputs pixel data Xk[n] (feedback amount) to which the error and data Xh[n] are added.

Fig. 26 is a view showing the relationship between reference pixels and reference intensities.

As in Fig. 4, a pixel indicated by symbol X is a pixel of interest of binarization, x indicates the main scan direction of recording, and y indicates the sub-scan direction of recording. A hatched part above the pixel X of interest indicates binarized pixels. Binarized pixels indicated by a0, a1, a2, and a3 are reference pixels, and values a0, a1, a2, and a3 indicate reference intensities. Note that the reference pixels are binarized pixels in the vicinity of the pixel X of interest, and image quality changes largely depending on selected reference pixels. A reference intensity ai = 0 represents that data of the corresponding binarized pixel is not referred to, and the reference intensities are normalized assuming $\Sigma ai = 1$. The output from the gain adjuster 24 is given by:

$$Xh[n] = h \times \sum_i (ai \times Yi) \quad ...(8)$$

where h is a gain coefficient, and Yi is the value (0 or 255) of the i-th reference pixel.

Binarization Result by Green Noise Method

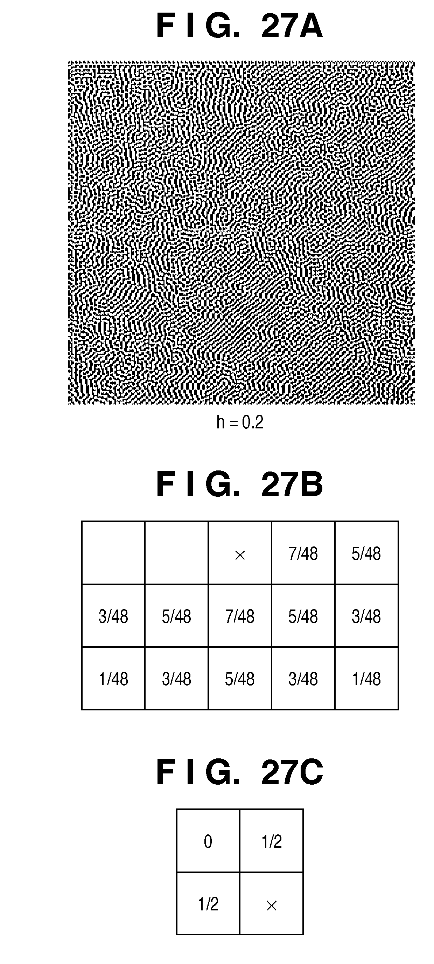

Figs. 27A to 27C are views showing the binarization result of a uniform halftone image of image data ranging from 120 to 140 by the green noise method as in Figs. 5 and 22. Fig. 27B shows an error diffusion matrix, and Fig. 27C shows a reference pixel matrix. A gain coefficient is h = 0.2. Note that the error diffusion matrix shown in Fig. 27B is called a Jarvis matrix, which expresses a distribution in which the diffusion amount monotonically decreases with increasing distance from a pixel of interest (to be referred to as "concentrated type" hereinafter).

The binarization result shown in Fig. 27A expresses cluster dots which shift to the low-frequency region more than that using the error diffusion matrix having the ring filter characteristic shown in Fig. 22. Data of a reference pixel (binarized pixel) is 0 or 255, and a value obtained by multiplying that data by h (0 or 255 × h) is added to data of the pixel of interest. As a result, binarization of the pixel of interest is more likely to copy the characteristic of the reference pixel. When the reference pixel is white, the pixel of interest is more likely to be binarized to white; when it is black, the pixel of interest is more likely to be binarized to black. Therefore, the dot patterns of the output image mainly include patterns which are connected in the direction of reference pixels.

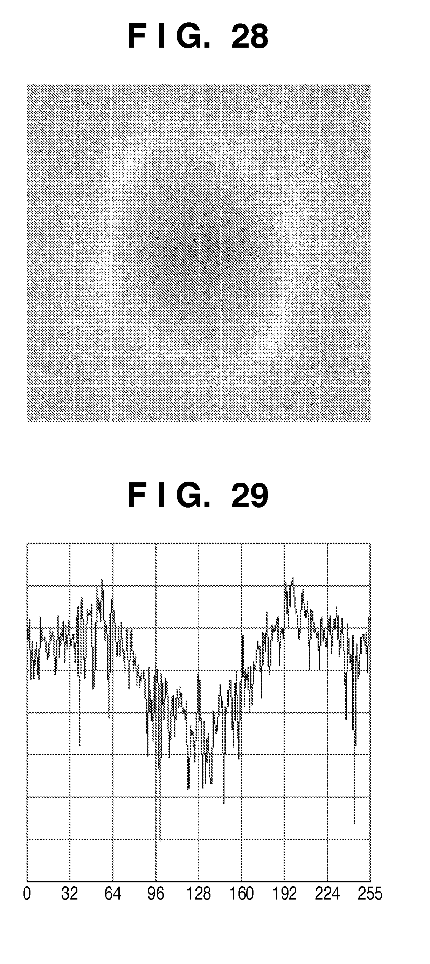

Fig. 28 is a view showing the spatial frequency characteristic of the image shown in Fig. 27A by two-dimensional Fourier transformation, and Fig. 29 is a graph showing the spectral intensities of a section along the ordinate of a spectrum pattern shown in Fig. 28. As can be seen from Figs. 28 and 29, a green noise characteristic in which spectra are concentrated in a doughnut-shaped, certain spatial frequency region, and the spectral intensities of the low- and high-frequency regions lower is exhibited.

Optimization of Green Noise Method

The artifacts of regions 1 and 4 described above are eliminated using the green noise method. However, since the green noise method is based on the error diffusion method, the binarization result has a large influence of an error diffusion matrix. Thus, an error diffusion matrix which provides relatively high image quality in regions 1 and 4 will be explored first.

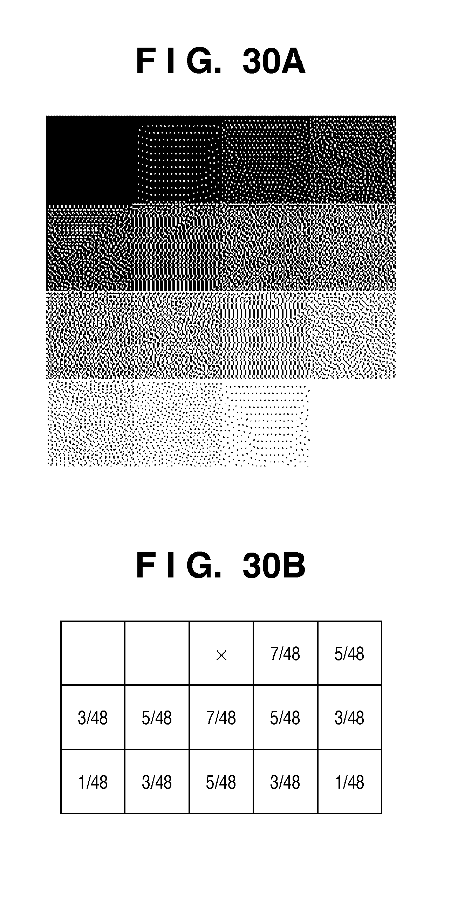

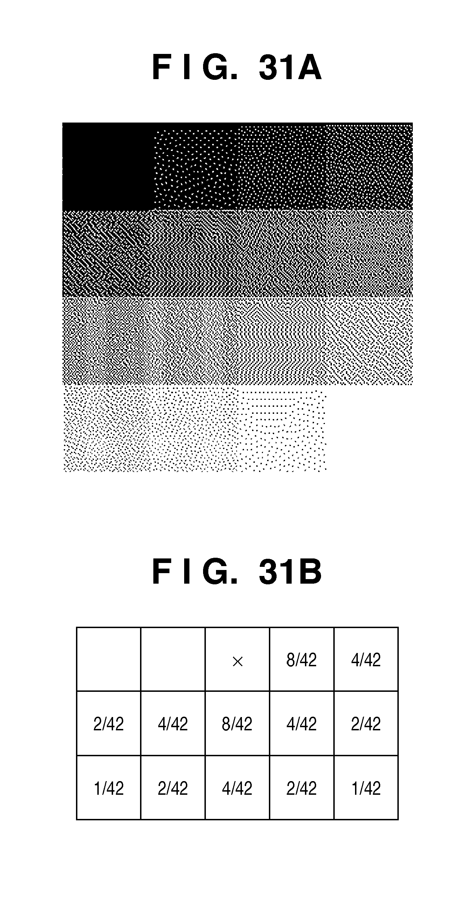

Figs. 30A and 30B and Figs. 31A and 31B are views showing the binarization results of the grayscale chart shown in Fig. 7A using different error diffusion matrices. As shown in Figs. 30B and 31B, Fig. 30A shows the result using a Jarvis matrix, and Fig. 31A shows the result using a concentrated type Sticki matrix. Upon comparison between Figs. 30A and 31A, the Sticki matrix can exhibit higher image quality in regions 1 and 4. Therefore, in the following description, the Sticki matrix will be used.

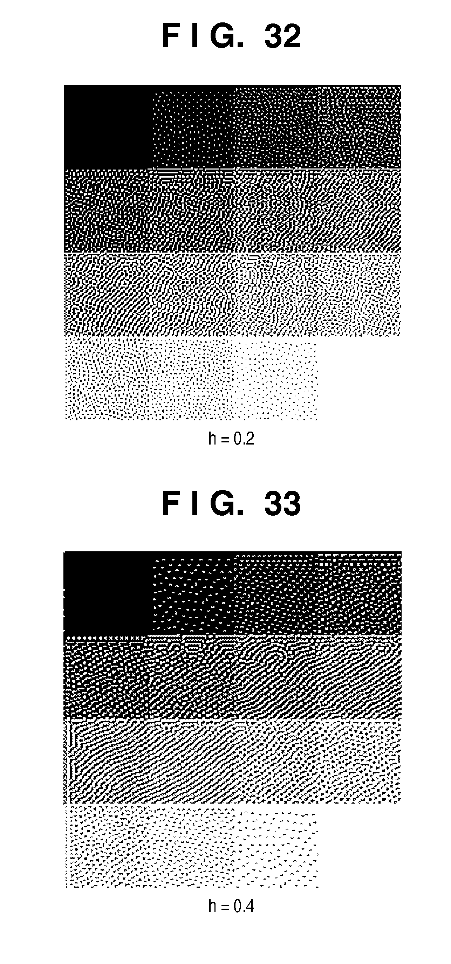

Figs. 32 and 33 are views showing the binarization results of the grayscale chart shown in Fig. 7A by the green noise method using the Sticki matrix. A reference pixel matrix is the same as that shown in Fig. 27C, and the gain coefficients are respectively h = 0.2 and h = 0.4 in Figs. 32 and 33.

When the gain coefficient h is increased, cluster dots become larger, and the spatial frequency shifts toward the low-frequency region. However, the image quality of regions 2 and 3 deteriorates, and patterns which run in a specific direction appear. For this reason, a certain spatial frequency forms a periodic structure to generate moiré. On the other hand, as can be seen from Figs. 32 and 33, the image quality of regions 1 and 4 does not so deteriorate, and the green noise characteristic is maintained.

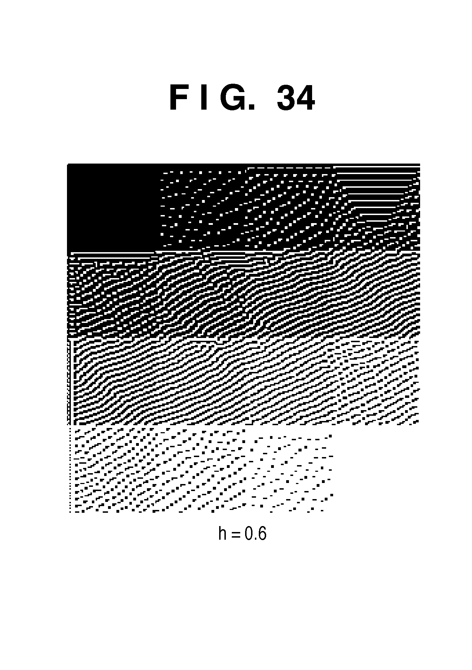

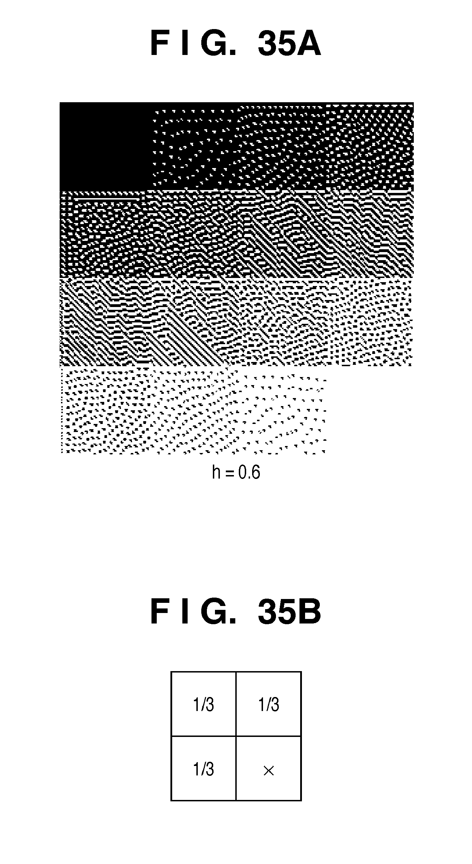

Fig. 34 is a view showing the binarization result when the gain coefficient is increased to h = 0.6. When the gain coefficient is increased up to such value, the image quality also deteriorates in regions 1 and 4. Furthermore, Figs. 35A and 35B are views showing the binarization result when a different reference pixel matrix is used. Fig. 35B shows a reference pixel matrix. Although the gain coefficient is h = 0.6, deterioration of the image quality in regions 1 and 4 is avoided in Fig. 35A. Therefore, the gain coefficient h = 0.4 is used as a basic value, and the gain coefficient h = 0.6 is used when the size of cluster dots is insufficient.

Whether the reference pixel matrix shown in Fig. 27C or 35B is used is determined depending on how to set the profile of a cluster halftone screen. The basic resolution of a printer tends to increase. In order to form a cluster halftone screen of 200 to 300 lines/inch, which can stably form a grayscale image in the electrophotography system, a cluster dot of about 6 x 6 pixels has to be formed in a printer having a basic resolution of 1200 dpi. Of course, in a printer having a basic resolution of 2400 dpi, a larger cluster dot has to be formed. In other words, a preparation that allows use of a large gain coefficient h is required.

Binarizing Processor

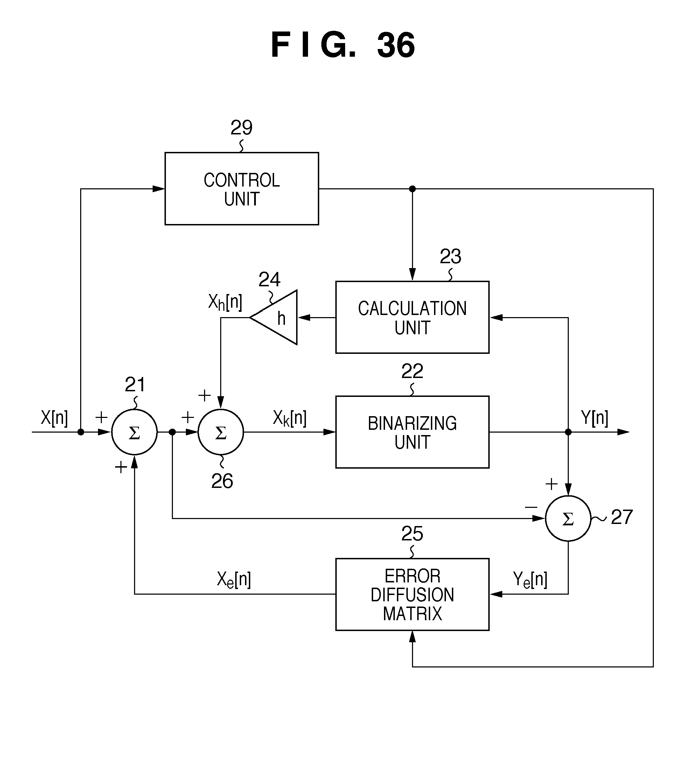

Fig. 36 is a block diagram showing the arrangement of a binarizing processor 33 according to the second embodiment.

The binarizing processor 33 of the second embodiment adopts a hybrid method which realizes a satisfactory cluster halftone screen on the entire region of an image by adaptively using the green noise method and error diffusion method. Unlike in the arrangement shown in Fig. 25, a control unit 29 controls an error diffusion matrix 25 and a reference matrix of a calculation unit 23 in accordance with the value of input pixel data X[n].

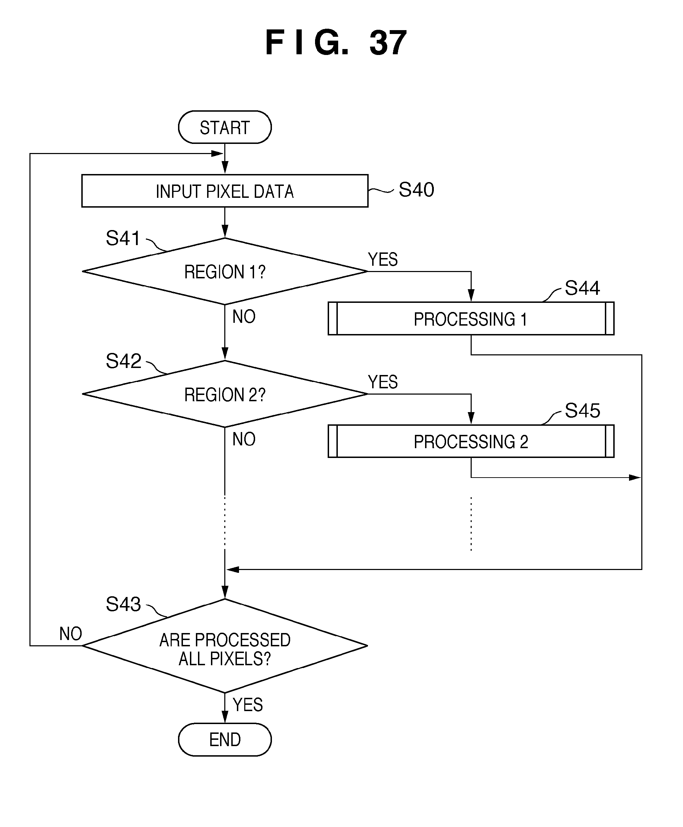

Fig. 37 is a flowchart for explaining the operation of the control unit 29 shown in Fig. 36.

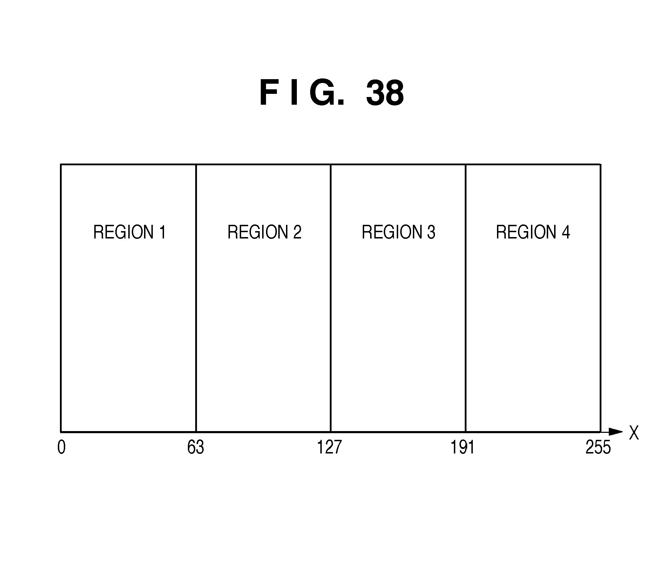

The control unit 29 inputs input pixel data X[n] in a raster-scan order (S40), and checks if input pixel data X[n] is included in region 1 ($0 \leq X < 63$) shown in Fig. 38 (S41). If the input pixel data X[n] is included in region 1, the control unit 29 controls the error diffusion matrix 25 and the reference matrix of the calculation unit 23 so as to attain processing 1 (to be described in detail later) (S44). If the input pixel data X[n] is not included in region 1, the control unit 29 checks if the input pixel data X[n] is included in region 2 ($63 \leq X < 127$) (S42). If the input pixel data X[n] is included in region 2, the control unit 29 controls the error diffusion matrix 25 and the reference matrix of the calculation unit 23 so as to attain processing 2 (to be described in detail later) (S45). As described above, a plurality of types of processing according to the values of the input pixel data X[n] (four types of processing in the example of Fig. 38) are set, and the aforementioned processing is repeated until it is determined in step S43 that the processing of all pixels of the input image is complete.

Fig. 38 is a view showing region segmentation of the values of data of a pixel of interest. When a value X of the pixel of interest is included in region 1 ($0 \leq X$ 63), processing 1 is executed. When the value X is included in region 2 ($63 \leq X < 127$), processing 2 is executed. When the value X is included in region 3 ($127 \leq X < 191$), processing 3 is executed. When the value X is included in region 4 ($191 \leq X < 256$), processing 4 is executed. In this way, when different processing is executed according to the value X of the pixel of interest, binarization can be executed using an appropriate error diffusion matrix and reference pixel matrix for each of regions 1 to 4 corresponding to the respective rows of the grayscale chart shown in Fig. 7A. Upon simplifying the processing, processing 1 is applied to regions 1 and 4 ($0 \leq X < 63$ and $191 \leq X < 256$), and processing 2 is applied to regions 2 and 3 ($63 \leq X < 191$).

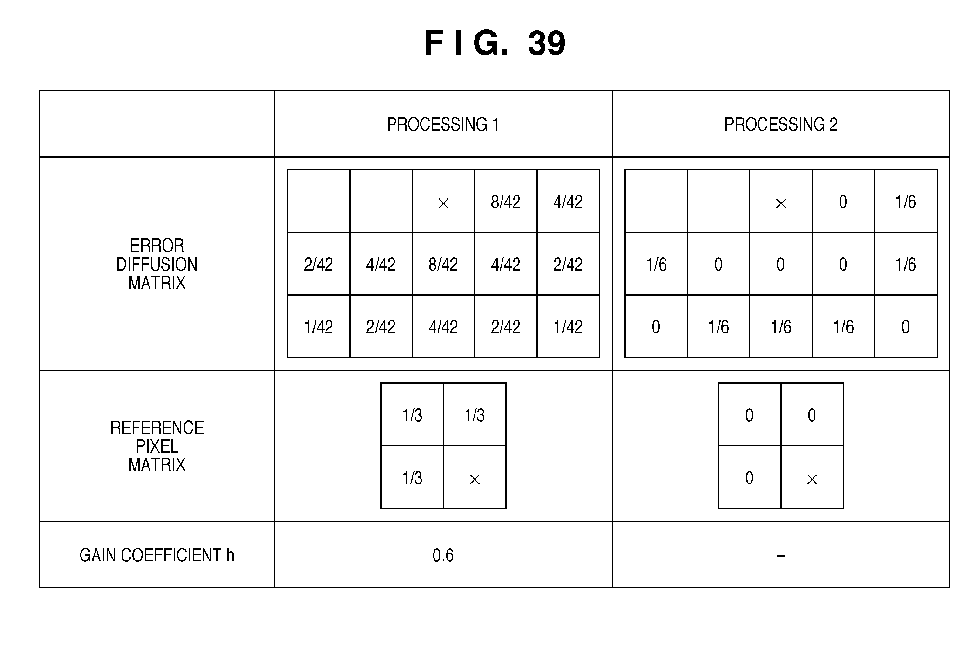

Fig. 39 is a view showing examples of error diffusion matrices, reference pixel matrices, and a gain coefficient used in processing 1 applied to regions 1 and 4, and processing 2 applied to regions 2 and 3.

Processing 1 executes binarizing processing by the error diffusion method using the Sticki matrix, and the green noise method (h = 0.6). Processing 2 executes binarizing processing by the error diffusion method using the error diffusion matrix having the ring filter characteristic.

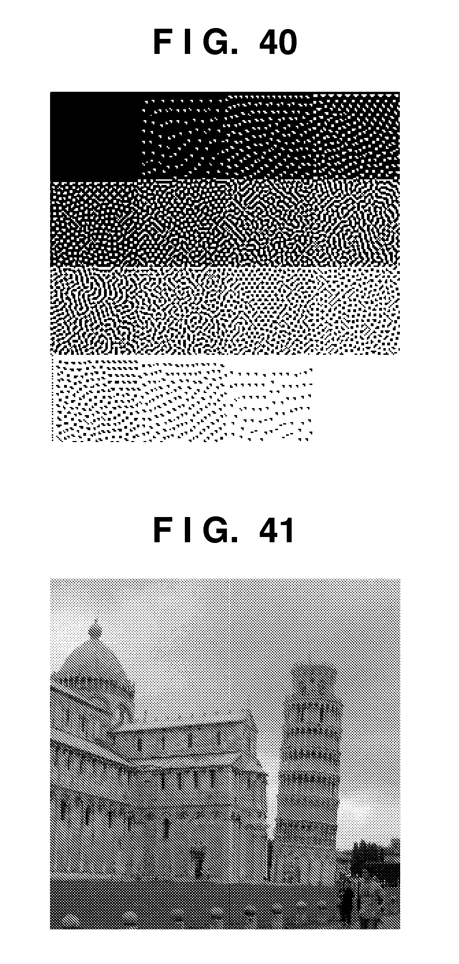

Fig. 40 is a view showing the binarization result of the grayscale chart shown in Fig. 7A by the binarizing processor 33 based on the hybrid method. In regions 1 to 4, dot clustering is uniformly attained.

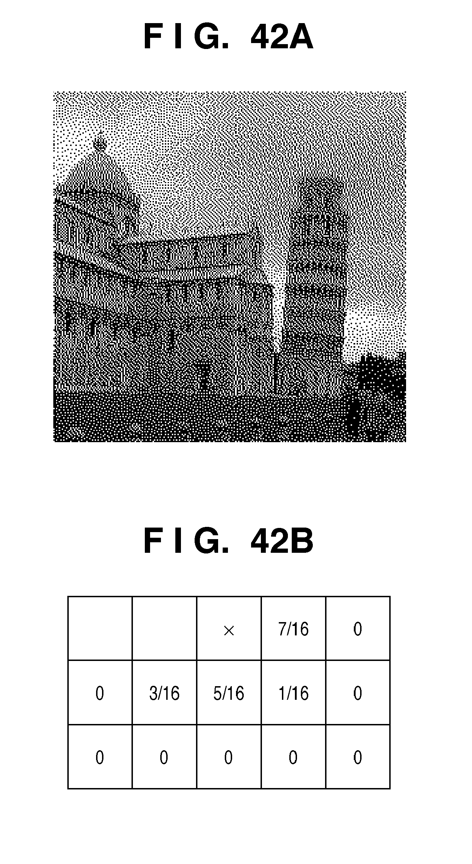

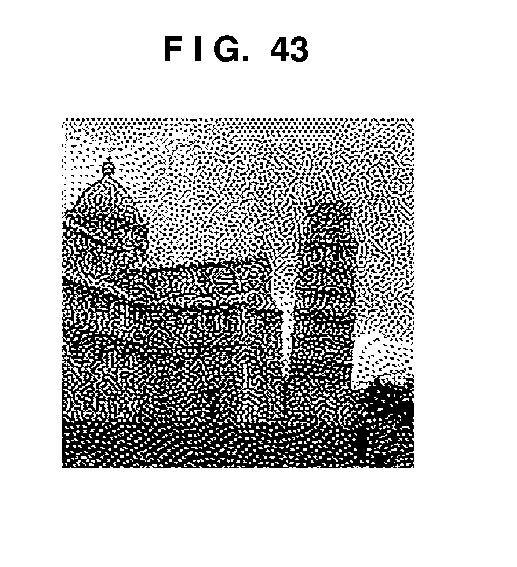

Figs. 42A and 42B are views showing the binarization result of a photo image shown in Fig. 41 using a simple error diffusion matrix. Fig. 42B shows an error diffusion matrix. Fig. 43 is a view showing the binarization result of the photo image shown in Fig. 41 by the binarizing processor 33 based on the hybrid method. As can be seen from the comparison between the images shown in Figs. 42A and 43, dots are clustered, and the center of the spatial frequencies shifts to the low-frequency region in Fig. 43.

As described above, by the hybrid method that combines the error diffusion matrix having the ring filter characteristic and the green noise method, the error diffusion matrix, reference pixel matrix, and gain coefficient are controlled in accordance with image data. Thus, a satisfactory grayscale image is reproduced by achieving stable tone reproduction, and the aforementioned deterioration (artifacts) of cluster dots can be eliminated.

Third Embodiment

Image processing according to the third embodiment of the present invention will be described below. Note that the same reference numerals in the third embodiment denote the same components as in the first and second embodiments, and a detailed description thereof will not be repeated.

In order to apply the image processing (binarization) method described in the first and second embodiments to various printers, a main spatial frequency of cluster dots has to be set at a spatial frequency at which a printer engine can stably form a grayscale image. Hence, the third embodiment controls parameters of the aforementioned hybrid method according to printer engines of various printers.

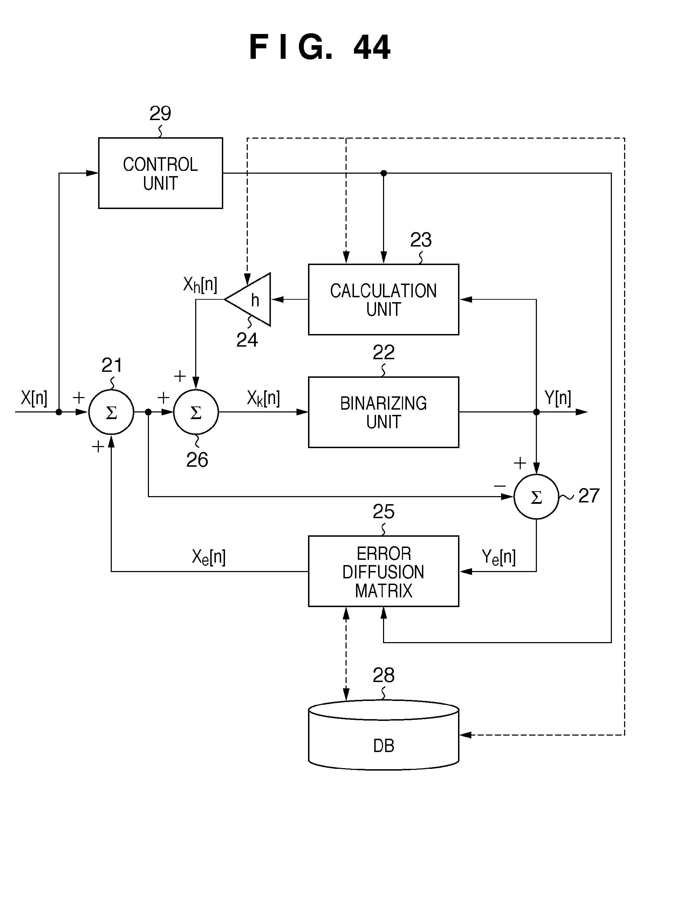

Fig. 44 is a block diagram showing the arrangement of a binarizing processor 33 according to the third embodiment.

The binarizing processor 33 according to the third embodiment allows selecting parameters of the hybrid method by adding a database (DB) 28 to the binarizing processor 33 based on the hybrid method according to the second embodiment shown in Fig. 36. That is, the DB 28 stores parameters of the hybrid method corresponding to various printer engines. For example, a service person or user selectively sets parameters by operating an operation panel 19. That is, the service person or user selects the parameters of the hybrid method corresponding to a printer engine of a printer 12 to be combined with a controller 13 from the DB 28 and sets them in an error diffusion matrix 25 and calculation unit 23.

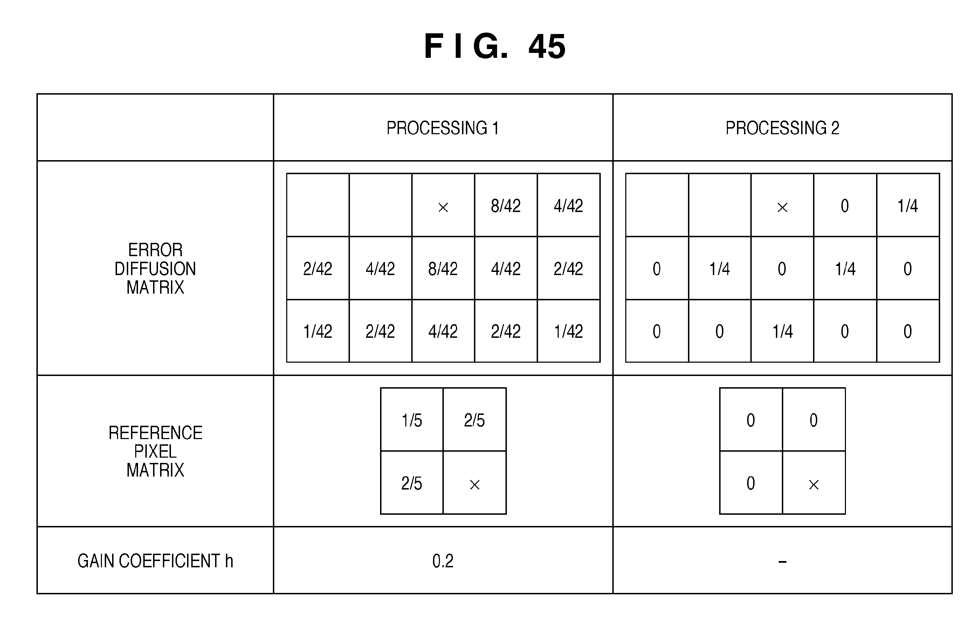

Fig. 45 is a view showing examples of error diffusion matrices, reference pixel matrices, and a gain coefficient used in processing 1 and processing 2, and shows an example of parameters that slightly reduce the cluster dot size.

As shown in Fig. 45, a radius $\underline{a}$ of a ring filter of an error diffusion matrix of processing 2 is smaller than that of the ring filter of the error diffusion matrix shown in Fig. 39. Therefore, the size of cluster dots in luminance (density) regions corresponding to regions 2 and 3 of the grayscale chart is smaller than that obtained when the parameters shown in Fig. 39 are used. The error diffusion matrix and reference pixel matrix of processing 1 have to be determined in consideration of this. The error diffusion matrix and reference pixel matrix of processing 1 shown in Fig. 45 are experimentally obtained: a Sticki matrix is used as the error diffusion matrix, and a reference pixel matrix that refers to three pixels is used. Likewise, the gain coefficient is set to be h = 0.2 based on experimental results.

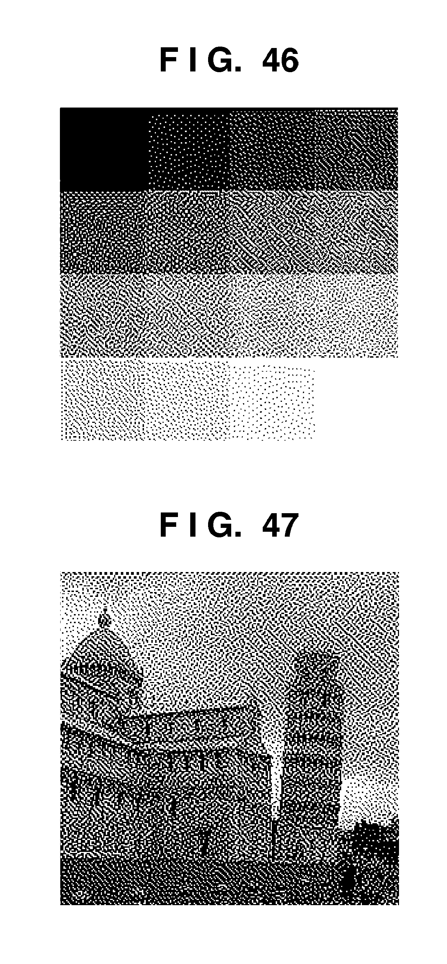

Fig. 46 is a view showing the binarization result of the grayscale chart shown in Fig. 7A using the parameters shown in Fig. 45, and dot clustering is uniformly attained in regions 1 to 4. As can be seen from a comparison between the images shown in Figs. 46 and 40, the size of cluster dots on the entire region of the image in Fig. 46 is slightly small.

Fig. 47 is a view showing the binarization result of the photo image shown in Fig. 41 using the parameters shown in Fig. 45. As can be seen from a comparison between the images shown in Figs. 47 and 43, the size of cluster dots on the entire region of the image in Fig. 47 is slightly small.

Note that the images shown in the attached drawings are expressed to have the enlarged cluster dot size so as to help easy understanding. The cluster dot size to be formed by a printer in practice is still smaller, needless to say.

Exemplary Embodiments

The present invention can be applied to a system constituted by a plurality of devices (e.g., host computer, interface, reader, printer) or to an apparatus comprising a single device (e.g., copying machine, facsimile machine).

Further, the present invention can provide a storage medium storing program code for performing the above-described processes to a computer system or apparatus (e.g., a personal computer), reading the program code, by a CPU or MPU of the computer system or apparatus, from the storage medium, then executing the program.

In this case, the program code read from the storage medium realizes the functions according to the embodiments.

Further, the storage medium, such as a floppy disk, a hard disk, an optical disk, a magnetooptical disk, CD-ROM, CD-R, a magnetic tape, a nonvolatile type memory card, and ROM can be used for providing the program code.

Furthermore, besides above-described functions according to the above embodiments can be realized by executing the program code that is read by a computer, the present invention includes a case where an OS (operating system) or the like working on the computer performs a part or entire processes in accordance with designations of the program code and realizes functions according to the above embodiments.

Furthermore, the present invention also includes a case where, after the program code read from the storage medium is written in a function expansion card which is inserted into the computer or in a memory provided in a function expansion unit which is connected to the computer, CPU or the like contained in the function expansion card or unit performs a part or entire process in accordance with designations of the program code and realizes functions of the above embodiments.

In a case where the present invention is applied to the aforementioned storage medium, the storage medium stores program code corresponding to the flowcharts described in the embodiments.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A quantizing unit quantizes a pixel of interest of an input image. An error detector calculates an error generated upon quantizing the pixel of interest. An error diffusion matrix diffuses the error to non-quantized pixels, which are separated by a predetermined distance from the pixel of interest and are located in a ring pattern, based on an error diffusion matrix.

**Claims**

1.  An image processing apparatus comprising:

    quantizing means for quantizing a pixel of interest of an input image; and
    first calculating means for calculating an error generated upon quantizing the pixel of interest, **characterized by** further comprising
    diffusing means for diffusing the error to non-quantized pixels, which are separated by a predetermined distance from the pixel of interest, and are located in a ring pattern, based on an error diffusion matrix.

2.  The apparatus according to claim 1, further comprising second calculating means for calculating a value to be added to the pixel of interest by referring to quantized pixels based on a reference pixel matrix, and add the calculated value to the pixel of interest.

3.  The apparatus according to claim 2, further comprising:

    memory means for storing error diffusion matrices and reference pixel matrices corresponding to printer engines; and
    a setting means for selectively setting the error diffusion matrix and the reference pixel matrix stored in said memory means to said diffusing means and said second calculating means.

4.  The apparatus according to claim 2, further comprising controlling means for controlling the error diffusion matrix of said diffusing means and the reference pixel matrix of said second calculating means in accordance with a value of the pixel of interest.

5.  The apparatus according to claim 4, wherein said controlling means controls a gain coefficient of said second calculating means in accordance with the value of the pixel of interest.

6.  The apparatus according to claim 1, wherein a diffusive ratio of the error to the non-quantized pixels by said diffusing means is set to be zero for a non-quantized pixel which neighbors the pixel of interest, and a finite value for a non-quantized pixel located outside the neighboring non-quantized pixel.

7.  The apparatus according to claim 1, wherein said diffusing means diffuses, at an identical diffusive ratio, the error to a plurality of non-quantized pixels which are located outside a non-quantized pixel that neighbors the pixel of interest.

8.  An image processing method comprising the steps of:

    quantizing a pixel of interest of an input image; and
    calculating an error generated upon quantizing the pixel of interest,
    **characterized by**
    diffusing the error to non-quantized pixels, which are separated by a predetermined distance from the pixel of interest, and are located in a ring pattern, based on an error diffusion matrix.

9.  A computer program for programming processing means to realize an apparatus in accordance with any one of claims 1 to 7.

# F I G. 1

CONTROLLER — 13

CPU — 17

18
DISPLAY UNIT

14
ROM

19
OPERATION PANEL

15
RAM

20
COMMUNICATION UNIT

16
HDD

SCANNER — 11

PRINTER — 12

10

# F I G. 2

EP 2 107 790 A2

# F I G.  3

# F I G.  4

# F I G. 5

# F I G. 6

# F I G. 7A

# F I G. 7B

| 0 | 17 | 34 | 51 |
|---|----|----|-----|
| 68 | 85 | 102 | 119 |
| 136 | 153 | 170 | 187 |
| 204 | 221 | 238 | 255 |

# FIG. 8A

# FIG. 8B

| | | × | 1/2 | 0 |
|---|---|---|---|---|
| 0 | 0 | 1/2 | 0 | 0 |
| 0 | 0 | 0 | 0 | 0 |

# F I G. 9A

# F I G. 9B

|   |     | ×   | 1/4 | 0 |
|---|-----|-----|-----|---|
| 0 | 1/4 | 1/4 | 1/4 | 0 |
| 0 | 0   | 0   | 0   | 0 |

# F I G. 10A

# F I G. 10B

|  |  | × | 1/6 | 1/6 |
|---|---|---|---|---|
| 0 | 1/6 | 1/6 | 1/6 | 0 |
| 0 | 0 | 1/6 | 0 | 0 |

# F I G. 11A

# F I G. 11B

|  |  | × | 1/10 | 1/10 |
|---|---|---|---|---|
| 1/10 | 1/10 | 1/10 | 1/10 | 1/10 |
| 0 | 1/10 | 1/10 | 1/10 | 0 |

# F I G. 12

# F I G. 13A

# F I G. 13B

| | | × | 0 | 1/4 |
|---|---|---|---|---|
| 0 | 1/4 | 0 | 1/4 | 0 |
| 0 | 0 | 1/4 | 0 | 0 |

EP 2 107 790 A2

# F I G. 14A

# F I G. 14B

|  |  | × | 0 | 1/6 |
|---|---|---|---|---|
| 1/6 | 0 | 0 | 0 | 1/6 |
| 0 | 1/6 | 1/6 | 1/6 | 0 |

24

# F I G. 15

# F I G. 16

# F I G.  17

# F I G.  18

# F I G. 19

# F I G. 20

# F I G. 21

# F I G. 22

# F I G. 23

# F I G. 24

# F I G. 25

# F I G. 26

# F I G. 27A

h = 0.2

# F I G. 27B

|  |  | × | 7/48 | 5/48 |
|---|---|---|---|---|
| 3/48 | 5/48 | 7/48 | 5/48 | 3/48 |
| 1/48 | 3/48 | 5/48 | 3/48 | 1/48 |

# F I G. 27C

| 0 | 1/2 |
|---|---|
| 1/2 | × |

# F I G. 28

# F I G. 29

0   32   64   96   128   160   192   224   255

# F I G. 30A

# F I G. 30B

|  |  | × | 7/48 | 5/48 |
|---|---|---|---|---|
| 3/48 | 5/48 | 7/48 | 5/48 | 3/48 |
| 1/48 | 3/48 | 5/48 | 3/48 | 1/48 |

# F I G. 31A

# F I G. 31B

|  |  | × | 8/42 | 4/42 |
|---|---|---|---|---|
| 2/42 | 4/42 | 8/42 | 4/42 | 2/42 |
| 1/42 | 2/42 | 4/42 | 2/42 | 1/42 |

# F I G. 32

h = 0.2

# F I G. 33

h = 0.4

# F I G. 34

h = 0.6

# F I G. 35A

h = 0.6

# F I G. 35B

| 1/3 | 1/3 |
|-----|-----|
| 1/3 | × |

# F I G. 36

# F I G. 37

START

INPUT PIXEL DATA — S40

S41 — REGION 1? — YES — PROCESSING 1 — S44

NO

S42 — REGION 2? — YES — PROCESSING 2 — S45

NO

S43 — ARE PROCESSED ALL PIXELS?

NO

YES

END

# F I G. 38

EP 2 107 790 A2

# F I G. 39

| | PROCESSING 1 | PROCESSING 2 |
|---|---|---|
| ERROR DIFFUSION MATRIX | <table><tr><td></td><td></td><td>×</td><td>8/42</td><td>4/42</td></tr><tr><td>2/42</td><td>4/42</td><td>8/42</td><td>4/42</td><td>2/42</td></tr><tr><td>1/42</td><td>2/42</td><td>4/42</td><td>2/42</td><td>1/42</td></tr></table> | <table><tr><td></td><td></td><td>×</td><td>0</td><td>1/6</td></tr><tr><td>1/6</td><td>0</td><td>0</td><td>0</td><td>1/6</td></tr><tr><td>0</td><td>1/6</td><td>1/6</td><td>1/6</td><td>0</td></tr></table> |
| REFERENCE PIXEL MATRIX | <table><tr><td>1/3</td><td>1/3</td></tr><tr><td>1/3</td><td>×</td></tr></table> | <table><tr><td>0</td><td>0</td></tr><tr><td>0</td><td>×</td></tr></table> |
| GAIN COEFFICIENT h | 0.6 | – |

EP 2 107 790 A2

# F I G. 40

# F I G. 41

# F I G. 42A

# F I G. 42B

|  |  | × | 7/16 | 0 |
|---|---|---|---|---|
| 0 | 3/16 | 5/16 | 1/16 | 0 |
| 0 | 0 | 0 | 0 | 0 |

# F I G. 43

# F I G. 44

# F I G. 45

EP 2 107 790 A2

| | PROCESSING 1 | PROCESSING 2 |
|---|---|---|
| ERROR DIFFUSION MATRIX | <table><tr><td></td><td></td><td>×</td><td>8/42</td><td>4/42</td></tr><tr><td>2/42</td><td>4/42</td><td>8/42</td><td>4/42</td><td>2/42</td></tr><tr><td>1/42</td><td>2/42</td><td>4/42</td><td>2/42</td><td>1/42</td></tr></table> | <table><tr><td></td><td></td><td>×</td><td>0</td><td>1/4</td></tr><tr><td>0</td><td>1/4</td><td>0</td><td>1/4</td><td>0</td></tr><tr><td>0</td><td>0</td><td>1/4</td><td>0</td><td>0</td></tr></table> |
| REFERENCE PIXEL MATRIX | <table><tr><td>1/5</td><td>2/5</td></tr><tr><td>2/5</td><td>×</td></tr></table> | <table><tr><td>0</td><td>0</td></tr><tr><td>0</td><td>×</td></tr></table> |
| GAIN COEFFICIENT h | 0.2 | – |

# F I G. 46

# F I G. 47

**REFERENCES CITED IN THE DESCRIPTION**

**Patent documents cited in the description**

- US 6798537 B